**Europäisches Patentamt**

**European Patent Office**

**Office européen des brevets**

(19)

(11) Numéro de publication : **0 400 247 B1**

(12) # FASCICULE DE BREVET EUROPEEN

(45) Date de publication du fascicule du brevet :
**29.07.92 Bulletin 92/31**

(51) Int. Cl.⁵ : **B60J 10/00**

(21) Numéro de dépôt : **89401507.2**

(22) Date de dépôt : **01.06.89**

(54) **Profilé pour joints d'étanchéité notamment pour carrosserie d'automobile.**

(43) Date de publication de la demande :
**05.12.90 Bulletin 90/49**

(45) Mention de la délivrance du brevet :
**29.07.92 Bulletin 92/31**

(84) Etats contractants désignés :
**DE ES FR GB**

(56) Documents cités :
**FR-A- 2 314 436**
**GB-A- 2 031 499**
**GB-A- 2 143 569**
**JP-A-60 121 143**
**US-A- 3 159 886**
**US-A- 4 310 164**

(73) Titulaire : **ETABLISSEMENTS MESNEL SOCIETE ANONYME DITE :**
**9 et 11, Rue de la Rivière**
**F-78420 Carrières-Sur-Seine (FR)**

(72) Inventeur : **Mesnel, François**
**6, bis rue Salignac Fénelon**
**F-92200 Neuilly S/Seine (FR)**

(74) Mandataire : **Jolly, Jean-Pierre et al**
**Cabinet Jolly 54, rue de Clichy**
**F-75009 Paris (FR)**

## Description

La présente ivention concerne les joints d'étanchéité du type dit complexe, comprenant un profilé en forme d'auge à section en U, comportant une armature métallique, gainée d'une matière souple telle que du caoutchouc ou une matière plastique, ce profilé étant destiné à être fixé par pincement sur un bord saillant ou une partie saillante d'une carrosserie d'automobile. Ce profilé est associé à un élément d'étanchéité, creux par exemple, destiné à être comprimé entre deux parties de la carrosserie, une portière et son encadrement par exemple.

En vue d'éviter des déformations et, notamment, un affaissement du profilé dans les zones de courbure marquée, qui auraient pour effet un défaut d'étanchéité entre les surfaces séparées par le joint, la demanderesse a proposé, dans le brevet US-A-4 310 164, correspondant au préambule de la revendication 1, d'utiliser un profilé caractérisé par la combinaison de deux caractéristiques :

– d'une part, l'armature métallique à section en U qu'il comporte est découpée en ajourages alternés, résultant de la présence, alternativement, d'entretoises discontinues, disposées axialement, dans le plan de l'armature développée, et d'entretoises discontinues disposées latéralement par rapport à l'axe;

– d'autre part, dans la matière plastique enrobant cette armature est incorporé, de façon connue en soi, au moins un fil pratiquement inextensible, par exemple en fibre de verre, dans la zone intermédiaire entre le profilé et l'élément d'étanchéité contigu et, plus particulièrement, dans la zone de fibres moyenne du profilé.

Pour ce qui est de la première caractéristique, il est expliqué, dans le brevet U.S., que l'on vise à remédier aux inconvénients des armatures de la technique connue antérieurement, qui avaient une forme dite "en arête de poisson", c'est-à-dire comprenant un élément longitudinal présentant, de part et d'autre, des appendices latéraux perpendiculaires, ou qui étaient même constituées d'éléments distincts séparés.

En poursuivant ses travaux sur ce type de joint la Demanderesse a établi qu'en vue de conserver à l'armature la souplesse requise par les profils de carrosserie auxquels elle doit s'adapter, tout en conférant au profilé un aspect monolithique et comparable à celui que lui conférerait une armature métallique pleine en forme de U, il est souhaitable de s'écarter encore davantage de la forme en arête de poisson des armatures traditionnelles et, par conséquent, d'éliminer des armatures des profilés conformes au brevet US-A-4 310 164 les portions subsistantes d'arête centrale, c'est-à-dire les entretoises disposées dans le plan de symétrie de l'armature.

A cet effet, l'invention a donc pour objet un profilé pour joint d'étanchéité selon la revendication 1, comprenant une armature métallique à section transversale en U, gainée d'au moins une matière plastique, dans laquelle est disposé au moins un fil pratiquement inextensible dans la zone intermédiaire entre le profilé et l'élément d'étanchéité associé, dans la région de la fibre moyenne du profilé, caractérisé en ce que ladite armature métallique résulte de la conformation en forme de canal en U d'une armature plane comprenant une succession d'éléments rectangulaires ajourés présentant des grands côtés perpendiculaires au plan de symétrie du U et des petits côtés parallèles à ce plan de symétrie, ces éléments rectangulaires étant réunis aux éléments contigus par deux entretoises parallèles au plan de symétrie du U et auxdits petits côtés, ces entretoises étant disposées symétriquement par rapport au plan de symétrie du U.

Lesdites entretoises auront de préférence une largeur sensiblement égale à celle des grands et des petits côtés des élément rectangulaires et elles sont disposées dans le prolongement les unes des autres.

Le fil inextensible noyé dans la matière plastique est contigu aux dites entretoises et parallèle à celles-ci.

L'armature du profilé conforme à l'invention pourra être réalisée de façon usuelle par découpage d'une bande métallique, par exemple un feuillard d'acier laminé à froid ou une bande d'aluminium.

La distance séparant les élément rectangulaires contigus sera de préférence sensiblement égale à l'écartement des grands côtés de ces éléments. Elle dépendra naturellement de la nature du matériau utilisé et de son épaisseur, en vue de conférer au profilé obtenu par le gainage de matière plastique par extrusion sur l'armature métallique une parfaite rectitude, donnant l'impression d'un profilé comportant une armature pleine. Dans la pratique, une distance d'environ 1,2 mm entre éléments rectangulaires contigus et entre grands côtés des éléments rectangulaires se révèle donner un effet optimum pour les épaisseurs usuelles des armatures métalliques de tels profilés, qui sont de l'ordre de 0,5 à 0,6 mm.

Les dessins annexés, qui n'ont aucun caractère limitatif, illustrent une forme de mise en oeuvre préférée du profilé selon la présente addition. Sur ces dessins :

La figure 1 est une vue en plan d'un tronçon de bande métallique convenablement découpée pour former, après pliage en U, l'armature d'un profilé conforme à l'invention ;

La figure 2 est une vue d'un joint d'étanchéité pour carrosserie d'automobile comportant un profilé conforme à l'invention.

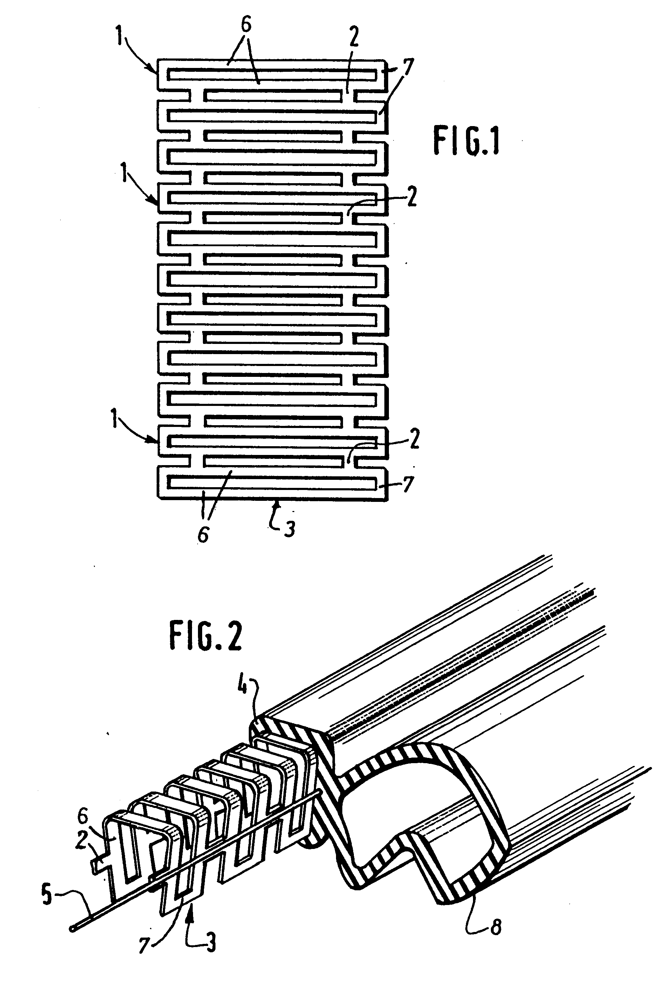

Comme on le voit sur la figure 1, l'armature 3 du profilé conforme à l'invention comprend une succession d'éléments rectangulaires 1 présentant des grands côtés 6 et des petits côtés 7 perpendiculaires aux précédents. Les grands côtés 6 sont réunis aux grands côtés des élément rectangulaires contigus par des entretoises latérales 2, disposées symétriquement, après conformation en U (voir figure 2), par rapport au plan de symétrie de l'armature, dans le prolongement les unes des autres, parallèlement aux petits côtés 7. Ces entretoises 2 ont la même longueur que les petits côtés 6 des éléments rectangulaires 1 et cette longueur peut avantageusement être de l'ordre de 1,2 mm.

Le profilé proprement dit, que l'on voit sur la figure 2, présente un plan de symétrie. Il comprend l'armature 3 de la figure 1, conformée en U et gainée d'une matière plastique 4 telle que le polychlorure de vinyle. Dans cette matière plastique est noyé au moins un fil 5 pratiquement inextensible, par exemple en fibre de verre ou en viscose, disposé dans la zone dite des fibres moyennes, parallèlement aux entretoises 2 et au voisinage de celles-ci et d'un élément tubulaire d'étanchéité 8 contrecollé sur le profilé ou coextrudé avec celui-ci. La nature de cet élément d'étanchéité peut naturellement être absolument quelconque.

Comme indiqué ci-dessus, avec l'armature métallique conforme à la présente invention, on obtient un profilé combinant à la foi la souplesse désirée de ce type de profilés et un aspect monolithique donnant l'impression d'une armature pleine.

## Revendications

1. Profilé pour joint d'étanchéité comprenant une armature métallique (3) à section transversale en U gainée d'au moins une matière plastique (4), dans laquelle est disposé au moins un fil pratiquement inextensible (5) dans la zone intermédiaire entre le profilé et l'élément d'étanchéité associé, dans la région de la fibre moyenne du profilé, l'armature métallique résultant de la conformation en forme de canal en U d'une armature plane qui comprend une succession d'éléments rectangulaires ajourés (1) présentant des grands côtés (6) perpendiculaires au plan de symétrie du U et des petits côtés (7) parallèles à ce plan se symétrie, ces éléments rectangulaires (1) étant réunis aux éléments contigus par deux entretoises (2) parallèles au plan de symétrie du U et aux petits côtés (7), ces entretoises (2) étant disposées symétriquement par rapport au plan de symétrie du U, dans le prolongement les unes des autres, ledit fil pratiquement inextensible (5) étant disposé parallèlement aux entretoises (2) au voisinage de celles-ci, ce profilé étant caractérisé en ce que lesdits entretoises (2) et lesdites entretoises (2) sont toutes les deux disposées dans la région de la fibre moyenne.

2. Profilé selon la revendication 1 équipé d'un organe d'étanchéité (8) attenant à la matière plastique gainant l'une des branches du U, caractérisé en ce que le fil de matière inextensible est noyé dans la matière plastique entre lesdites entretoises (2) et l'élément d'étanchéité (8).

3. Profilé selon l'une des revendications 1 ou 2, caractérisé en ce que lesdites entretoises (2), les grands côtés et les petits côtés des éléments rectangulaires (1) ont une longueur sensiblement identique.

4. Profilé selon l'une des revendications 1 à 3, caractérisé en ce que la distance séparant les éléments rectangulaires (1) contigus est sensiblement égale à l'écartement des grands côtés de ces éléments.

5. Profilé selon l'une des revendications 1 à 4, caractérisé en ce que la distance séparant les grands côtés des éléments rectangulaires (1) contigus et les grands côtés (6) d'un même éléments rectangulaire est de l'ordre de 1, 2 mm, lorsque l'armature (3) a une épaisseur de 0,5 à 0,6 mm.

## Patentansprüche

1. Dichtungsprofil mit einer Metallarmierung (3) mit U-förmigen Querschnitt, die von mindestens einem Kunststoffmaterial (4) umgeben ist, in welchem mindestens ein praktisch undehnbarer Faden (5) in der Übergangszone zwischen dem Profil und dem zugeordneten Dichtungselement, im Bereich der Mittelfaser bzw. neutralen Faser des Profils angeordnet ist, wobei die Metallarmierung sich aus der Bildung eines U-förmigen Kanals aus einer ebenen Armierung ergibt, die eine Folge von rechtwinkligen durchbrochenen Elementen (1) aufweist, die Längsseiten (6) senkrecht zur Symmetrie-Ebene des U und Schmalseiten (7) parallel zu dieser Symmetrie-Ebene bilden, wobei diese rechteckigen Elemente (1) an benachbarten Elementen durch zwei Querstreben (2) miteinander verbunden sind, die parallel zu der Symmetrie-Ebene des U und zu den Schmalseiten (7) sind, die Querstreben (2) symmetrisch bezüglich der Symmetrie-Ebene des U je in einer Reihe angeordnet sind, wobei der praktisch undehnbare Faden (5) parallel zu den Querstreben (2) diesen benachbart angeordnet ist, dadurch gekennzeichnet, daß die rechteckigen Elemente (1) ausschießlich über die Querstreben (2) miteinander verbunden sind und die Querstreben (2) alle beide im Bereich der neutralen Faser angeordnet sind.

2. Dichtungsprofil nach Anspruch 1, ausgerüstet mit einem Dichtungsorgan (8) angrenzend an das Kunstoffmaterial, das einen Schenkel des U umgibt, dadurch gekennzeichnet, daß der Faden des nichtdehnbaren Materials in dem Kunstoffmaterial zwischen den Querstreben (2) und dem Dichtelement (8) versenkt ist.

3. Dichtungsprofil nach einem der Ansprüche 1 oder 2, dadurch gekennzeichnet, daß die Querstreben (2), die Längsseiten und die Schmalseiten des rechteckigen Elements (1) eine im wesentlichen identische Länge aufweisen.

4. Dichtungsprofil nach einem der Ansprüche 1 bis 3, dadurch gekennzeichnet, daß der Abstand, der die benachbarten rechteckigen Elemente (1) trennt, im wesentlichen gleich dem Abstand der Längsseiten dieses Elements ist.

5. Dichtungsprofil nach einem der Ansprüche 1 bis 4, dadurch gekennzeichnet, daß der Abstand, der die Längsseiten der benachbarten rechteckigen Elemente (1) und die Längsseiten (6) desselben rechteckigen Elements trennt, in der Größenordnung von 1 bis 2 mm ist, wenn die Armierung (3) eine Stärke von 0,5 bis 0,6 mm hat.

## Claims

1. A shaped portion for a seal member comprising a metal reinforcement (3) of U-shaped cross-section sheathed with at least a plastics material (4) in which at least one practically inextensible thread (5) is disposed in the intermediate zone between the shaped portion and the associated sealing element, in the region of the neutral fibre of the shaped portion, the metal reinforcement resulting from shaping in a U-shaped channel configuration of a flat reinforcement which comprises a succession of apertured rectangular elements (1) having long sides (6) which are perpendicular to the plane of symmetry of the U-shape and short sides (7) which are parallel to said plane of symmetry, said rectangular elements (1) being connected to the contiguous elements by two cross bar portions (2) which are parallel to the plane of symmetry of the U-shape and to the short sides (7), said cross bar portions (2) being disposed symmetrically with respect to the plane of symmetry of the U-shape, in line with each other, said practically inextensible thread (5) being disposed parallel to the cross bar portions (2) in the vicinity thereof, said shaped portion being characterised in that said rectangular elements (1) are joined exclusively by said cross bar portions (2) and every two of said - cross bar portions (2) are disposed in the region of the neutral fibre.

2. A shaped portion according to claim 1 provided with a sealing member (8) adjoining the plastics material sheathing one of the limbs of the U-shape characterised in that the thread of inextensible material is embedded in the plastics material between said cross bar portions (2) and the sealing element (8).

3. A shaped portion according to one of claim 1 and 2 characterised in that said cross bar portions (2), the long sides and the short sides of the rectangular elements (1) are of a substantially identical length.

4. A shaped portion according to one of claim 1 to 3 characterised in that the distance separating the contiguous rectangular elements (1) is substantially equal to the spacing of the long sides of said elements.

5. A shaped portion according to one of claim 1 to 4 characterised in that the distance separating the long sides of the contiguous rectangular elements (1) and the long sides (6) of the same rectangular element is of the order of 1.2 mm when the reinforcement (3) is from 0.5 to 0.6 mm in thickness.

FIG.1

FIG.2